(19) **Europäisches Patentamt / European Patent Office / Office européen des brevets**

(11) **EP 1 175 280 B1**

(12) **FASCICULE DE BREVET EUROPEEN**

(45) Date de publication et mention de la délivrance du brevet:
**01.08.2007 Bulletin 2007/31**

(51) Int Cl.:
**B24B 13/00** *(2006.01)*  **B23P 23/02** *(2006.01)*

(21) Numéro de dépôt: **01911833.0**

(86) Numéro de dépôt international:
**PCT/FR2001/000628**

(22) Date de dépôt: **02.03.2001**

(87) Numéro de publication internationale:
**WO 2001/066308 (13.09.2001 Gazette 2001/37)**

(54) **PROCEDE DE FABRICATION D'UNE SURFACE D'UNE LENTILLE OPHTALMIQUE ET INSTALLATION DE MISE EN OEUVRE DU PROCEDE**

VERFAHREN ZUR HERSTELLUNG EINER OBERFLÄCHE EINER OPHTHALMISCHEN LINSE UND VORRICHTUNG ZUR DURCHFÜHRUNG DES VERFAHRENS

METHOD FOR MAKING AN OPHTHALMIC LENS SURFACE AND INSTALLATION THEREFOR

(84) Etats contractants désignés:
**AT BE CH CY DE DK ES FI FR GB GR IE IT LI LU MC NL PT SE TR**

(30) Priorité: **06.03.2000 FR 0002849**

(43) Date de publication de la demande:
**30.01.2002 Bulletin 2002/05**

(73) Titulaire: **ESSILOR INTERNATIONAL (Compagnie Générale d'Optique)**
**F-94220 Charenton-le-Pont (FR)**

(72) Inventeurs:
• **PADIOU, Jean-Marc**
**F-94500 Champigny-sur-Marne (FR)**
• **BERNARD, Joël**
**F-94490 Ormesson sur Marne (FR)**
• **JEANNIN, Christophe**
**95560 MAFFLIERS (FR)**

(74) Mandataire: **Santarelli**
**14, avenue de la Grande Armée,**
**B.P. 237**
**75822 Paris Cedex 17 (FR)**

(56) Documents cités:
| | |
|---|---|
| EP-A- 0 281 754 | EP-A- 0 685 298 |
| EP-A- 0 758 571 | EP-A- 0 849 038 |
| WO-A- 92/00832 | DE-A- 19 616 526 |
| US-A- 5 417 130 | US-A- 5 452 031 |
| US-A- 5 919 013 | |

## Description

La présente invention concerne de manière générale la fabrication de lentilles ophtalmiques, appelées plus communément verres, à monter dans une monture de lunettes.

Elle concerne plus particulièrement un procédé de fabrication d'une surface d'une lentille ophtalmique, selon une prescription donnée, ainsi qu'une installation de mise en oeuvre de ce procédé.

La surface à réaliser peut être sphérique, asphérique, torique, atorique ou plus généralement une surface complexe telle qu'une surface progressive, sans toutefois être limitée à ce type de surface.

Actuellement, il existe des machines très sophistiquées qui permettent de fabriquer une surface d'une lentille ophtalmique présentant une qualité optique acceptable, en une seule étape d'usinage. Cela implique une vitesse d'avance de l'outil d'usinage et un pas de recouvrement de cet outil sur la surface à usiner très faibles, une haute précision du positionnement de l'outil d'usinage sur ladite surface et un temps d'usinage très élevé.

De telles machines à haute précision sont relativement coûteuses, et les temps d'usinage mis en oeuvre sont importants, ce qui conduit à un coût de réalisation des lentilles ophtalmiques prohibitif pour une production industrielle.

La présente invention propose alors un nouveau procédé qui permet de réaliser rapidement une surface d'une lentille ophtalmique, selon une prescription donnée, à l'aide de machines requérant une précision moindre, tout en obtenant une surface de lentille de bonne qualité optique, qui satisfait en outre à des exigences cosmétiques.

Plus particulièrement, selon l'invention, le procédé comprend les étapes suivantes :

a) usinage de ladite surface par enlèvement de matière en déplaçant un outil de coupe selon une trajectoire continue dans une enveloppe de surface à atteindre, pour former des sillons, deux sillons adjacents étant espacés d'un pas constant compris entre 0,01 et 3 mm, de façon à obtenir une surface présentant une rugosité moyenne arithmétique Ra comprise entre environ 0,1 et 0,7 $\mu$m, et

b) lissage de la surface usinée en déplaçant un outil de lissage selon une trajectoire continue formée de courses dans une enveloppe de surface à atteindre, deux courses adjacentes étant espacées d'un pas constant compris entre 0,2 et 3 mm, pour réaliser un filtrage passe-bande des ondulations de cette surface entre une fréquence basse correspondant à ladite enveloppe de surface et une fréquence haute correspondant à une rugosité de fond, de façon à obtenir une surface lissée présentant une rugosité moyenne arithmétique Ra inférieure à 0,1 $\mu$m.

Préférentiellement, selon le procédé conforme à l'invention, à l'étape b) on obtient une surface lissée de rugosité Ra comprise entre 0,05 et 0,07 $\mu$m.

A l'étape a) et à l'étape b), les trajectoires de l'outil de coupe et de l'outil de lissage sont avantageusement des spirales.

Selon le procédé conforme à l'invention, on peut par exemple utiliser une lentille semi-finie présentant une face moulée, l'autre face étant adaptée à la prescription du porteur.

On peut tout aussi bien utiliser un élément dont les deux faces sphériques sont parallèles, les deux surfaces seront alors modifiées selon le procédé de l'invention.

Avantageusement, à la suite de l'étape b), le procédé conforme à l'invention comporte une étape c) d'application sur ladite surface lissée d'une couche de vernis pour conférer à la surface un état de surface poli.

Cette dernière étape c) remplace l'opération de polissage qui est une étape longue et fastidieuse et qui nécessite un outil spécifique pour chaque géométrie de surface.

A l'étape c) du procédé selon l'invention, l'épaisseur de la couche de vernis déposée sur ladite surface peut être comprise entre environ 500 Ra et 800 Ra, Ra correspondant à la rugosité de surface obtenue à l'étape b).

Au minimum, selon l'invention, l'épaisseur de la couche de vernis déposée sur ladite surface est comprise entre environ 30 Ra et 200 Ra, Ra correspondant à la rugosité de surface obtenue à l'étape b).

Le vernis déposé à l'état liquide sur ladite surface conformément au procédé selon l'invention, présente préférentiellement une viscosité à 25°C comprise entre 1000 et 3000 mPas, et un indice de réfraction égal à l'indice de réfraction de la lentille ophtalmique avec une tolérance de $\pm$ 0,01.

L'usinage de l'étape a) peut être réalisé par fraisage ou par tournage.

Dans le cas d'un usinage par tournage on peut, par exemple, utiliser une machine de type tour vertical telle que la machine HSC 100 CNC réalisée par la Société SCHNEIDER. Une telle machine est décrite dans la demande de brevet EP 0 849 038.

L'invention concerne également une installation de mise en oeuvre du procédé précité selon la revendication 28.

Préférentiellement, l'outil de lissage de la machine de lissage selon l'invention comporte un support rigide et un organe de travail solidaire du support, qui est de forme annulaire et dont les dimensions sont faibles par rapport à celles de la surface à lisser mais relativement importantes par rapport aux défauts de surface à éliminer.

Cet organe de travail comporte en superposition : un noyau élastiquement déformable de dureté comprise entre 30 et 80 degrés shore A, une couche de surface élastiquement déformable, mais dont l'élasticité est inférieure à celle du noyau, et un film abrasif ou un support entraînant un abrasif qui forme la surface de travail dudit organe de travail.

La description qui va suivre au regard des dessins annexés, donnés à titre d'exemples non limitatifs, fera bien comprendre en quoi consiste l'invention et comment elle peut être réalisée.

Sur les dessins annexés :

- les figures 1 et 2 représentent l'organigramme de deux modes de réalisation du procédé selon l'invention ;
- la figure 3 représente une vue schématique en coupe longitudinale d'une lentille ophtalmique selon l'invention ;
- la figure 4a est une vue en coupe de détail d'une partie de la surface d'une lentille ophtalmique, obtenue après la première étape du procédé selon l'invention ;
- la figure 4b est une vue en coupe de détail d'une partie de la surface d'une lentille ophtalmique, obtenue après la deuxième étape du procédé selon l'invention ;
- la figure 5 est une vue schématique en perspective et une projection dans le plan X, Y de la trajectoire d'un outil de fraisage lors de la première étape du procédé selon l'invention ;
- la figure 6 est une représentation schématique partielle d'une machine outil d'usinage de l'installation selon l'invention ;
- la figure 7 est une représentation schématique partielle d'une machine outil de lissage de l'installation selon l'invention ;
- la figure 8 est une vue en coupe axiale de l'outil de lissage de la machine outil représentée sur la figure 7 ; et
- la figure 9 représente schématiquement une partie d'une machine de dépôt de vernis de l'installation selon l'invention.

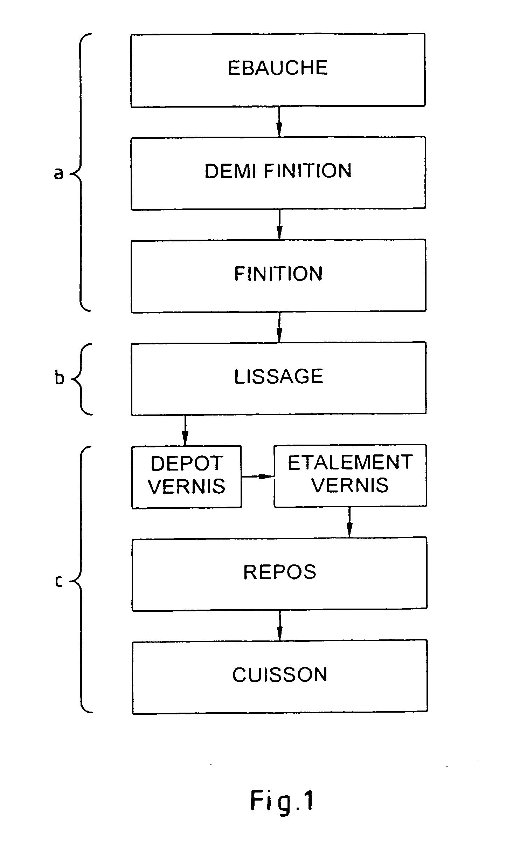

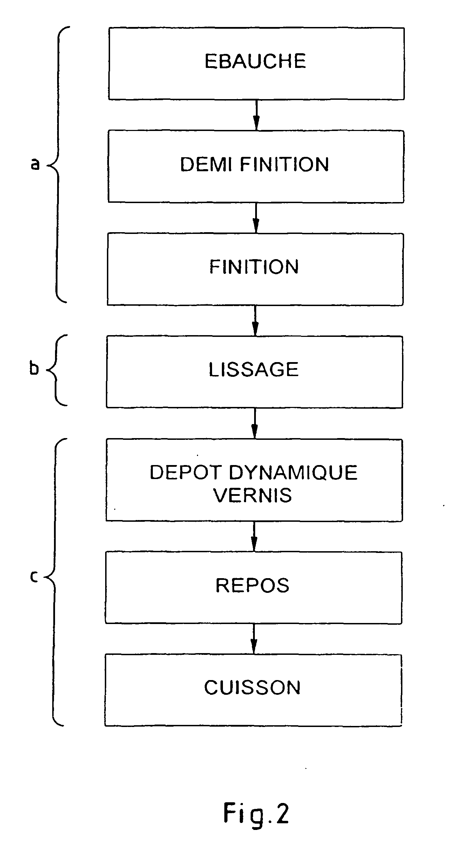

Sur les figures 1 et 2 on a représenté l'organigramme de deux modes de réalisation d'un procédé de fabrication d'une surface d'une lentille ophtalmique, selon une prescription donnée.

Préférentiellement, selon ce procédé on utilise une lentille semi-finie avec une face avant ou arrière moulée, l'autre face étant selon le procédé adaptée à la prescription optique requise. On peut tout aussi bien réaliser les deux surfaces de la lentille selon le procédé de l'invention.

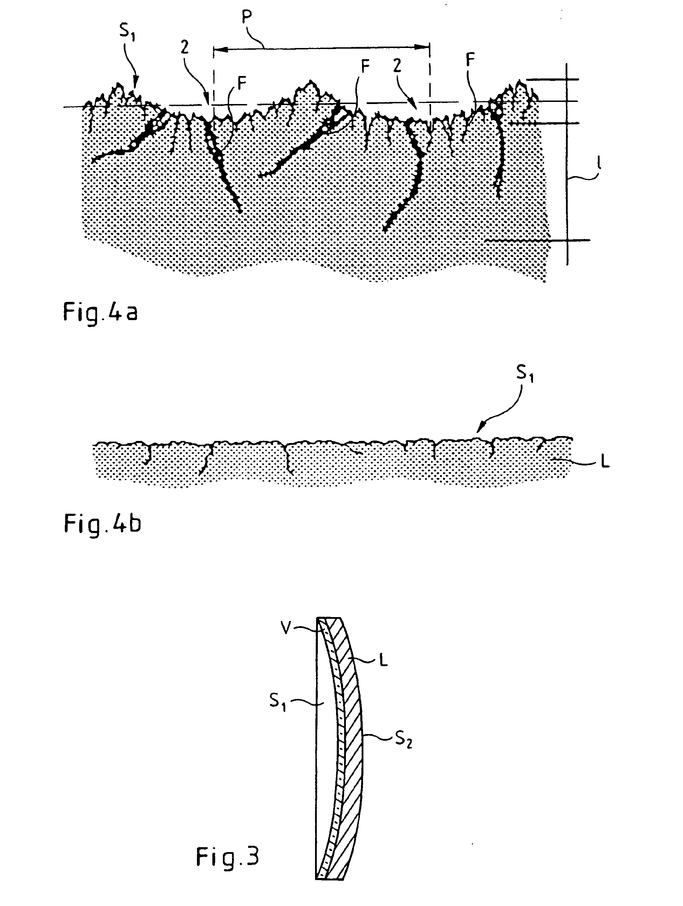

Une lentille ophtalmique L obtenue selon le procédé de fabrication qui va être décrit ultérieurement est plus particulièrement représentée sur la figure 3.

Ici, la surface $S_1$ de la lentille ophtalmique L, adaptée à la prescription selon le procédé de fabrication décrit, est la surface arrière concave $S_1$, la surface avant convexe $S_2$ étant obtenue par moulage.

Le procédé de fabrication représenté comporte une première étape a) qui est une étape d'usinage de ladite surface par enlèvement de matière en déplaçant un outil de fraisage selon une trajectoire continue dans une enveloppe de surface à atteindre, pour former des sillons 2 (voir figure 4a), deux sillons 2 adjacents étant espacés d'un pas P constant compris entre 0,01 et 3 mm, de façon à obtenir une surface présentant une rugosité moyenne arithmétique Ra comprise entre environ 0,1 et 0,7 μm.

Pour déterminer la rugosité moyenne arithmétique Ra de la surface, il est avantageusement utilisé un profilomètre/rugosimètre FTS (Form Talysurf Series) commercialisé notamment par la Société TAYLOR HOBSON.

Cet appareil comporte une tête laser (par exemple une tête ayant la référence 112/2033-308), un palpeur (référence 112/1836) de longueur 70 mm muni d'une tête sphéro-conique de rayon 2 mm.

Cet appareil mesure, dans le plan de coupe choisie, un profil en deux dimensions. L'acquisition du profil, dans le présent cas, est réalisée sur 10 mm, ce qui permet d'obtenir une courbe Z = f (x).

De ce profil on peut extraire différentes caractéristiques de surface et notamment forme, ondulation et rugosité.

Ainsi, pour déterminer la rugosité Ra, le profil subit deux traitements différents, le retrait de la forme et un filtrage qui correspond au retrait de la ligne moyenne.

Les différentes étapes pour déterminer un tel paramètre Ra sont donc les suivantes :

- acquisition du profil Z = f (x),
- retrait de la forme,
- filtrage (retrait de la ligne moyenne), et
- détermination du paramètre Ra.

L'étape d'acquisition du profil consiste à déplacer, sur la surface de la lentille en question, le stylet de l'appareil précité qui enregistre les attitudes Z de la surface en fonction du déplacement X.

Lors de l'étape de retrait de la forme, le profil obtenu à l'étape précédente est rapporté à une sphère idéale, c'est-à-dire une sphère pour laquelle les écarts de profil par rapport à cette sphère sont minimaux. Le mode choisi ici est LS arc, retrait du meilleur arc de cercle.

Cela permet d'obtenir ainsi une courbe représentative des caractéristiques du profil de la surface en termes d'ondulation et de rugosité.

L'étape de filtrage permet de ne conserver que les défauts correspondant à certaines longueurs d'onde. En l'occurrence, on cherche à exclure les ondulations, défaut dont les longueurs d'onde sont plus élevées que les longueurs d'onde des défauts dus à la rugosité. Le filtre est ici du type Gaussien, la coupure utilisée est de 0,08 mm.

A partir de la courbe obtenue, la rugosité moyenne arithmétique Ra est déterminée selon la formule suivante :

$$Ra = \frac{1}{N}\sum_{n=1}^{N}|Z_n|$$

où $Z_n$ est, pour chaque point, l'écart algébrique Z, par rapport à la ligne moyenne calculée au filtrage.

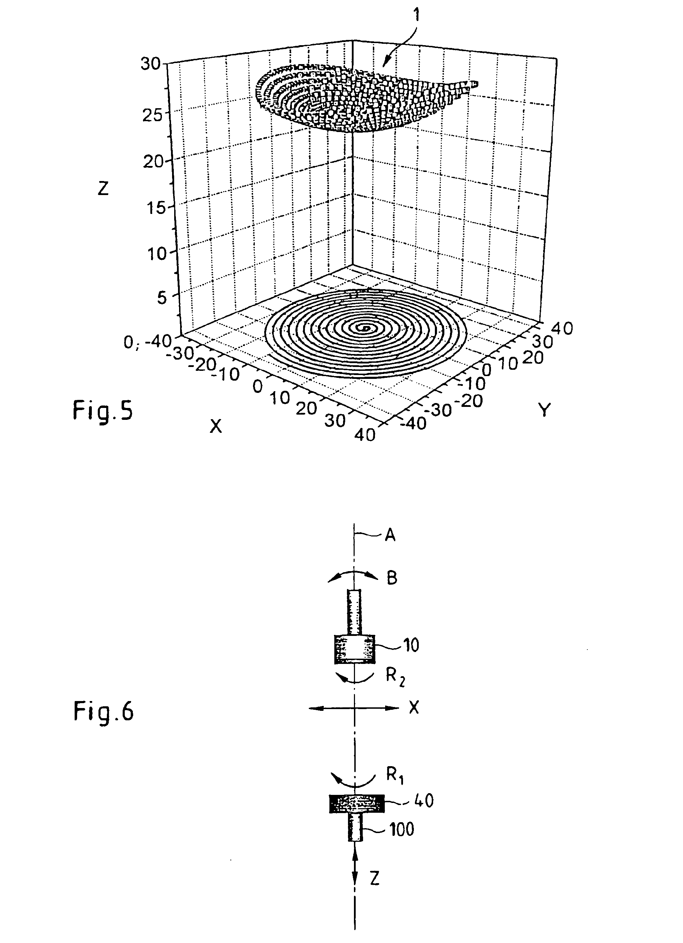

Préférentiellement, la trajectoire de l'outil de fraisage lors de cette étape a) est une spirale (voir figure 5) dont la projection dans le plan horizontal X, Y est une spirale 1 à pas constant.

Lors de cette étape a), il est possible de choisir un sens de rotation de l'outil de fraisage pour qu'il travaille en avalant ou en repoussant.

Ici, préférentiellement, l'outil de fraisage à l'étape a) présente un sens de rotation en avalant.

De plus, à l'étape a), la profondeur de passe de l'outil de fraisage est comprise environ entre 4 et 0,05 mm et l'avance par dent de l'outil de fraisage est comprise entre 0,05 et 0,03 mm.

L'avance par dent correspond au déplacement sur la surface de la lentille de l'outil de fraisage entre le passage de deux dents successives de cet outil.

Préférentiellement, comme cela est représenté sur les figures 1 et 2, l'étape a) de ce procédé de fabrication se subdivise entre trois sous-étapes :

1) une étape d'ébauche présentant les paramètres suivants :

le pas de la trajectoire de l'outil de fraisage est de l'ordre de 3 mm,
la profondeur de passe de l'outil de fraisage est de l'ordre de 4 mm,
l'avance par dent de l'outil de fraisage est de l'ordre de 0,05 mm,

2) une étape de demi-finition présentant les paramètres suivants :

le pas de la trajectoire de l'outil de fraisage est de l'ordre de 2 mm,
la profondeur de passe de l'outil de fraisage est de l'ordre de 0,1 mm,
l'avance par dent de l'outil de fraisage est de l'ordre de 0,04 mm, et

3) une étape de finition présentant les paramètres suivants :

le pas de la trajectoire de l'outil de fraisage est de l'ordre de 1 mm,
la profondeur de passe de l'outil de fraisage est de l'ordre de 0,05 mm,
l'avance par dent de l'outil de fraisage est de l'ordre de 0,03 mm.

Lors de l'étape d'ébauche, l'étape de demi-finition et l'étape de finition, la trajectoire de l'outil de fraisage reste une spirale, et le sens de rotation de l'outil de fraisage est fixé comme précité, de sorte qu'il travaille en avalant.

Lors de l'étape d'ébauche, l'enlèvement de matière sur la surface à usiner est fixé par la capacité maximum de l'outil de fraisage. Si cette capacité est inférieure à l'épaisseur de matière à retirer, il faut envisager d'exécuter alors plusieurs passes. Les enlèvements de matière à la surface de la lentille à usiner lors de l'étape de demi-finition et de finition, sont fixés en fonction des défauts créés sur ladite surface par l'outil de fraisage lors de l'étape d'ébauche précédente.

L'étape a) d'usinage est réalisée à l'aide d'une machine outil dont un schéma de principe est représenté sur la figure 6. Cette machine fait partie d'une installation de mise en oeuvre du procédé selon l'invention. Elle est du type machine outil à unité de commande numérique, et comporte un support 40 de lentille déplaçable en translation selon un axe vertical A, la translation étant matérialisée par les flèches Z sur la figure 6. Ce support 40 peut également être entraîné en rotation (matérialisée par la flèche $R_1$) autour de l'axe longitudinal de la broche 100 supportant le support 40. Ici, l'axe longitudinal est un axe vertical. De plus, cette machine d'usinage comporte, un outil de fraisage 10 qui est déplaçable en translation selon un axe horizontal matérialisé par les flèches X, et inclinable par rapport à un axe vertical, l'inclinaison étant matérialisée sur la figure 6 par les flèches B. L'outil de fraisage 10 peut être entraîné en rotation autour de l'axe vertical A, la rotation étant matérialisée sur la figure 6 par la flèche $R_2$. Les mouvements d'avance du support 40 et de l'outil de fraisage 10, à savoir les mouvements de translation Z et de rotation $R_1$ du support 40, et les mouvements de translation X et d'inclinaison B de l'outil de fraisage, sont pilotés simultanément par ladite unité de commande numérique, la rotation $R_2$ de l'outil de fraisage 10 étant pilotée en vitesse par l'unité de commande numérique.

Grâce au pilotage par la commande numérique de la machine outil d'usinage, on peut suivre selon l'axe Z matérialisé sur la figure 5 le modèle de la surface à usiner sur la lentille ophtalmique (moyennant un décalage calculé en fonction de la profondeur de chaque passe de l'outil de fraisage).

Une telle machine outil d'usinage à commande numérique est notamment décrite dans la demande de brevet européen EP 0 685 298.

Plus généralement, ce document décrit un dispositif et un procédé de fabrication d'une surface de lentille dans lequel on choisit tout d'abord le type de façonnage selon qu'est spécifié un contour de façonnage sphérique ou asphérique. Après cela suit le choix du type de géométrie, qui peut être convexe, concave ou plan. Les paramètres de géométrie correspondants tels que le rayon de courbure, le diamètre externe, l'épaisseur centrale de la lentille, etc. et les paramètres de façonnage d'outil tels que le diamètre efficace de la partie périphérique, son diamètre de lèvre, son angle de dérivation, sa vitesse d'avance et le nombre de tours de l'outil boisseau sont ensuite introduits. Avec ceci, la trajectoire de l'outil est calculée dans l'unité de commande et il s'en suit le façonnage de la lentille le long du contour de façonnage. A la suite de cette phase de travail du meulage et/ou du polissage, la surface est explorée, ce qui est utilisé pour obtenir des données de correction, lesquelles peuvent être utilisées pour une rectification de la trajectoire de l'outil pour un façonnage ultérieur (voir plus particulièrement colonne 7 lignes 16 à 36).

L'outil de fraisage 10 de la machine outil d'usinage mis en oeuvre à l'étape a), offre différentes géométries, sphère, tore, ou autre, et est réalisé en différents matériaux, par exemple en diamant poly cristallin ou carbure.

Le rayon de l'outil de fraisage doit être adapté aux courbures de la surface $S_1$ à réaliser, pour éviter des problèmes d'interférence avec ladite surface ou de profondeur de passe.

Au cours de l'étape a) d'usinage subdivisée en trois sous-étapes, l'outil de fraisage est lubrifié pour éviter son échauffement. Cette lubrification est préférentiellement réalisée avec une émulsion qui est un mélange d'eau et d'huile (5 % d'huile). Cette lubrification est avantageusement directionnelle et sous pression pour provoquer un dégagement des copeaux réalisés lors de l'usinage et un nettoyage de l'outil de fraisage.

A l'issue de l'étape d'usinage a), la surface usinée $S_1$, représentée dans le détail sur la figure 4a, comporte des sillons 2 formés par l'outil de fraisage, deux sillons 2 adjacents étant espacés d'un pas P, qui est le pas de la trajectoire de l'outil de fraisage. Ces sillons 2 régulièrement espacés forment des ondulations sur la surface usinée. La surface $S_1$ usinée présente une rugosité (rugosité moyenne arithmétique Ra) générée par l'outil de coupe, qui est ici comprise entre environ 0,1 et 0,7 $\mu$m. En outre, le passage de l'outil de fraisage provoque des fractures et endommagements subsurfaciques F, qui présentent une longueur maximum 1 de l'ordre de 5 $\mu$m.

Selon le procédé représenté, l'étape d'usinage a) est suivie d'une étape b) de lissage au cours de laquelle on cherche à éliminer les ondulations produites sur la surface $S_1$ usinée, à réduire les fractures et à modifier la rugosité de cette surface pour obtenir une rugosité inférieure à 0,1 $\mu$m.

L'étape b) de lissage du procédé selon l'invention consiste à déplacer un outil de lissage selon une trajectoire continue formée de courses dans une enveloppe de surface à atteindre, deux courses adjacentes étant déplacées d'un pas constant compris entre 0,2 et 3 mm, pour réaliser un filtrage passe-bande des ondulations de cette surface entre une fréquence basse correspondant à ladite enveloppe de surface et une fréquence haute correspondant à une rugosité de fond.

La trajectoire de l'outil de lissage au cours de l'étape b) de lissage est une spirale à pas constant.

Le pas entre deux courses adjacentes de la trajectoire de l'outil de lissage à l'étape b), est avantageusement compris entre 0,40 et 1,25 mm et préférentiellement égal à 0,625 mm.

La surface $S_1$ lissée obtenue à l'étape b) est représentée plus particulièrement sur la figure 4b et présente préférentiellement une rugosité comprise entre 0,05 et 0,07 $\mu$m.

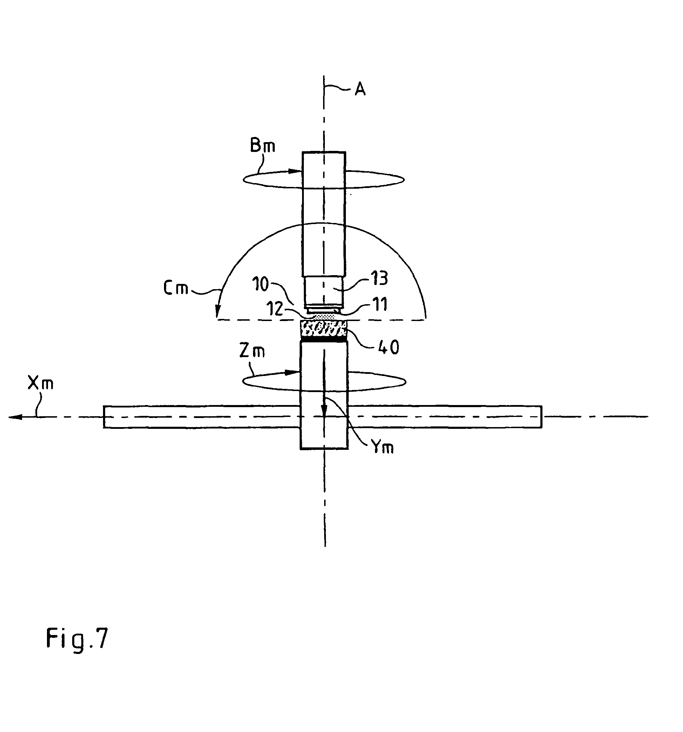

L'étape b) de lissage est réalisée à l'aide d'une machine de lissage dont le schéma de principe est représenté sur la figure 7.

Cette machine de lissage est une machine du type machine outil à unité de commande numérique, comportant un support 40 de lentille déplaçable en translation selon l'axe vertical Ym et pouvant être entraîné en rotation autour d'un axe vertical A parallèle, la rotation étant matérialisée par la référence Zm sur la figure 7. La machine de lissage comporte également un outil de lissage 10 porté par une broche 13 propre à permettre l'entraînement en rotation de cet outil. La rotation de l'outil 10 s'effectue autour de l'axe vertical A d'entraînement en rotation du support, et est matérialisée par la référence Bm sur la figure 7. En outre, cet outil de lissage 10 est déplaçable en translation selon l'axe horizontal Xm et est inclinable par rapport à l'axe vertical autour duquel il est entraîné en rotation, l'inclinaison étant matérialisée sur la figure 7 par la référence Cm.

Tout comme pour la machine d'usinage, les mouvements d'avance du support et de l'outil, à savoir les mouvements de translation et de rotation du support 40 et les mouvements de translation et d'inclinaison de l'outil de lissage 10, sont pilotés simultanément par l'unité de commande numérique de la machine de lissage, la rotation de l'outil de lissage 10 étant pilotée en vitesse par l'unité de commande numérique.

Ici aussi, la machine outil de lissage est du type de celle décrite dans le brevet européen No EP 0 685 298.

La vitesse de déplacement selon les axes est déterminée pour obtenir une vitesse quasi constante de l'avance de l'outil de lissage 10 sur la surface à lisser.

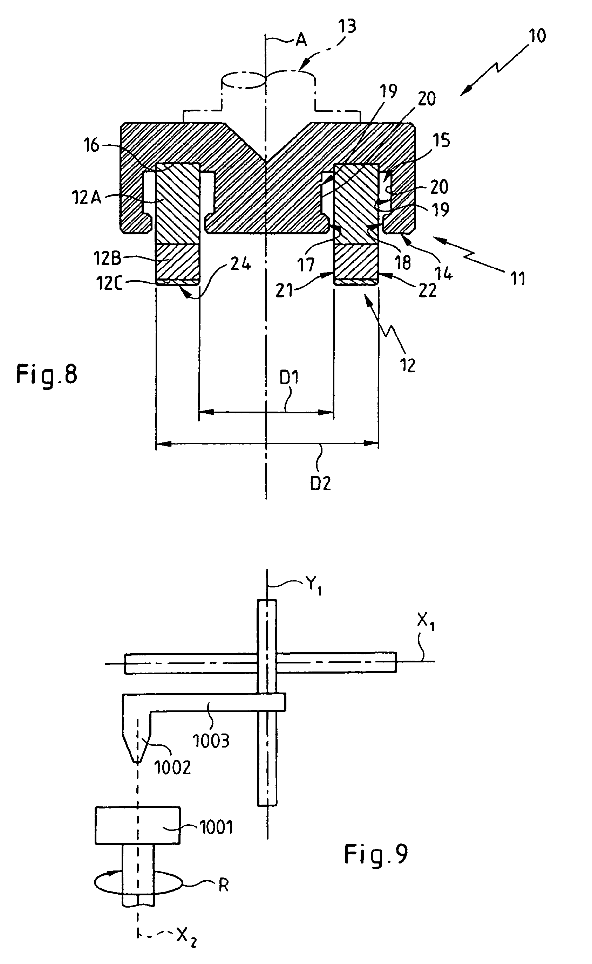

L'outil de lissage 10 de la machine de lissage est plus particulièrement représenté sur la figure 8.

Cet outil de lissage 10 comporte un support rigide 11 et un organe de travail 12 solidaire du support 11, qui est de forme annulaire et qui présente des dimensions faibles par rapport à celles de la surface à lisser mais relativement importantes par rapport aux défauts à éliminer.

Selon un exemple de réalisation, l'organe de travail 12 présente un diamètre interne D1 compris entre 6 et 10 mm, et un diamètre externe D2 compris entre 10 et 15 mm, préférentiellement le diamètre interne D1 est de l'ordre de 6 mm et le diamètre externe D2 est de l'ordre de 10 mm.

Le support rigide 11 est porté par la broche 13 et il forme, en creux, sur sa surface transversale 14 opposée à la broche 13, c'est-à-dire sur sa surface libre, un logement annulaire 15, au fond duquel est rapporté l'organe de travail 12. En effet, l'organe de travail 12 est rapporté sur le fond 16 du logement annulaire 15 du support 11. L'organe de travail 12 fait saillie au-delà du support 11, c'est-à-dire au-delà de la surface libre 14 de ce dernier.

Outre le fond 16, le logement annulaire 15 du support rigide 11 est délimité par deux surfaces latérales 17, 18 coaxiales et axées sur l'axe de rotation A de l'outil et s'étendant sensiblement perpendiculairement au fond 16.

Dans le mode de réalisation représenté sur la figure 8, les surfaces latérales 17, 18 du logement annulaire 15 comportent, en creux, une gorge de déchargement 19.

Cette gorge de déchargement 19 s'étend dans la zone médiane des surfaces latérales 17, 18, sur environ la moitié de la hauteur de celles-ci, et, dans la forme de réalisation représentée, son fond 20 est cylindrique en étant axé sur l'axe de rotation A de l'outil de lissage.

En outre, dans la forme de réalisation représentée sur la figure 8, l'organe de travail 12 est lui-même délimité par des surfaces latérales 21, 22 cylindriques, et il couvre la totalité du fond 16 du logement annulaire 15 du support 11.

La section annulaire de l'organe de travail est centrée sur l'axe d'entraînement en rotation A de la broche 13 de l'outil de lissage.

Dans la forme de réalisation représentée sur la figure 8, l'outil de lissage comporte en superposition trois parties 12A, 12B, 12C.

La première partie de l'organe de travail 12 de l'outil de lissage est un noyau élastiquement déformable 12A..

Ce noyau élastiquement déformable 12A est par exemple un élastomère, son élasticité est choisie en fonction de la capacité de déformation souhaitée et de l'effort d'appui à soutenir en fonctionnement.

Par exemple, la dureté de ce noyau élastiquement déformable 12A est comprise entre 30 et 80 degrés shore A et préférentiellement comprise entre 40 et 70 degrés shore A et par exemple égale à 40 degrés shore A.

Comme cela est représenté sur la figure 8, le noyau élastiquement déformable 12A s'étend au-delà du support 11, de sorte qu'il fait saillie de la surface libre 14 de celui-ci.

Ensuite, l'organe de travail 12 comprend une couche élastiquement déformable 12B, mais dont l'élasticité est inférieure à celle du noyau 12A.

Tandis que le noyau élastiquement déformable 12A a à charge d'encaisser les déformations de la surface optique travaillée, en permettant ainsi une adaptation de l'ensemble à cette surface optique, la couche de surface 12B a à charge de conférer à l'ensemble toute la rigidité nécessaire pour permettre le lissage recherché.

Par exemple, cette couche de surface 12B est en polyuréthane.

Puis, l'organe de travail comporte un film abrasif 12C ou un support entraînant un abrasif qui forme la surface de travail 24 dudit organe de travail.

Ce film abrasif 12C est par exemple réalisé en diamant présentant une granulométrie comprise entre 1 et 45 $\mu$m et préférentiellement entre 1 et 15 $\mu$m par exemple égale à 6 $\mu$m.

Par exemple, les trois parties constitutives de l'organe de travail 12, c'est-à-dire le noyau élastiquement déformable 12A, la couche de surface 12B et le film abrasif 12C, sont solidarisées les unes aux autres par collage et cet organe de travail 12 est lui-même solidarisé par collage au support 11.

Le procédé de fabrication représenté sur les figures 1 et 2 comprend, avantageusement, à la suite de l'étape b) de lissage, une étape c) d'application sur ladite surface lissée d'une couche de vernis V pour conférer à la surface $S_1$ un état de surface poli.

Lors de cette étape, on dépose sur ladite surface lissée une épaisseur de couche de vernis comprise entre 500 Ra et 800 Ra, Ra correspondant à la rugosité de la surface obtenue à l'étape b) de lissage.

Au minimum, à l'étape c), l'épaisseur de la couche de vernis déposée sur la surface est comprise entre 30 Ra et 200 Ra, Ra correspondant à la rugosité de surface obtenue à l'étape b) du procédé.

Le vernis déposé à l'état liquide sur la surface lissée $S_1$ présente une viscosité à 25°C comprise entre 1000 et 3000 mPas.

En outre, il présente un indice de réfraction égal à l'indice de réfraction du substrat, c'est-à-dire de la lentille ophtalmique, avec une tolérance de $\pm$ 0,01.

Ainsi, le vernis et la lentille constituent un seul dioptre.

On peut utiliser, comme vernis, un matériau du type acrylique ou de type époxy.

A titre d'exemple, la composition liquide de vernis utilisée comprend :

-   un monomère de type polyacrylate ou poly(méth) acrylate, et éventuellement un (méth)acryloxysilane, ou
-   un monomère à fonction(s) époxy ou leurs mélanges.

Cette composition comprend au moins un monomère polyacrylate ou au moins un monomère à fonction(s) époxy. Elle peut comprendre un mélange de monomères diacrylate et triacrylate. Le monomère diacrylate comprend alors préférentiellement un polyester uréthane diacrylate aliphatique et il est choisi parmi le triméthylolpropane éthoxylétriacrylate et le pentaerythritol triacrylate. Le ratio en poids diacrylate/triacrylate varie avantageusement de 50/50 à 40/60. La composition liquide de vernis utilisée à l'étape c) peut comprendre également un mélange d'un monoacryloxysilane et d'un polyacrylate. Le polyacrylate comprend alors le dipentaerythritol pentaacrylate. La composition liquide de vernis comprend en outre de la silice colloïdale ou un oligomère époxyacrylate halogéné et préférentiellement bromé et, éventuellement, un monomère acrylate d'indice inférieur d'au moins 0,1 par rapport à celui de l'époxyacrylate halogéné.

Comme le montre plus particulièrement la figure 9, la machine d'application de la couche de vernis sur la surface lissée de la lentille comprend avantageusement un support 1001 de lentille pouvant être entraîné en rotation R autour d'un axe vertical $X_2$, et un bras 1003 portant une buse 1002 de distribution à faible pression du vernis liquide, déplaçable en translation selon les axes $X_1$ (horizontal) et $Y_1$ (vertical) par rapport au support 1001.

Le dépôt du vernis sur la surface peut être effectué par cette machine de trois manières différentes.

On peut prévoir de déposer la quantité totale du vernis au centre de la surface $S_1$ de la lentille arrêtée. La buse 1002 est alors centrée sur l'axe de rotation $X_2$ du support 1001.

Puis, l'étalement du vernis s'effectue par centrifugation, en entraînant en rotation la lentille autour de l'axe $X_2$.

Cela correspond au procédé représenté sur la figure 1.

L'étalement du vernis est obtenu par centrifugation lente, la rotation de la lentille étant contrôlée en accélération, en vitesse et en durée de façon à conserver un maximum de vernis.

A titre d'exemple, l'étalement peut être réalisé en entraînant la lentille en rotation à 500 tr/min pendant une durée de 10 secondes.

Selon un second mode de réalisation, dit semi-dynamique, la buse est maintenue en position fixe, centrée sur l'axe $X_2$ du support 1001, le dépôt étant effectué alors que la lentille est entraînée en rotation.

Selon un troisième mode de réalisation représenté plus particulièrement sur la figure 2, la dépose de la couche de vernis peut être réalisée en combinant la rotation de la lentille autour de l'axe $X_2$ et le déplacement du bras 1003 du centre vers le bord de la lentille, ou du bord vers le centre de la lentille par translation dudit bras 1003 selon l'axe $X_1$.

Cela correspond à un dépôt dynamique du vernis sur la lentille, qui peut s'avérer avantageux pour couvrir des surfaces à fortes composantes toriques.

Par la suite, on procède à la tension du vernis sur ladite surface, en entraînant la lentille en rotation à une vitesse égale à environ 1000 tr/min. La durée de l'étape de tension du vernis est de l'ordre de 50 secondes.

La buse de distribution de vernis est à faible pression de l'ordre de $0,7.10^5$ Pa pour obtenir un dépôt de vernis sans bulle.

La hauteur de chute du vernis est paramétrable par déplacement du bras 1003 selon l'axe $Y_1$, mais reste fixe pendant le dépôt du vernis sur la lentille.

Après avoir déposé la couche de vernis sur la lentille, que ce soit par un dépôt statique, semi-dynamique ou dynamique, selon le procédé représenté sur les figures 1 et 2, on fait reposer le vernis pendant une durée comprise entre 2 et 3 minutes à température ambiante (comprise entre 25 et 30°C). Le temps de repos du vernis à température ambiante permet d'améliorer la qualité du polissage.

Puis vient l'étape finale de polymérisation du vernis qui est ici avantageusement obtenue par photopolymérisation de la couche de vernis préférentiellement par rayonnement ultraviolet. Ce mode de polymérisation est plus rapide que le mode thermique, et peut s'effectuer à température ambiante. Il est alors nécessaire que le vernis soit photopolymérisable.

Ainsi, on obtient, selon le procédé décrit, une lentille L telle que représentée sur la figure 3 qui comporte une surface concave lissée $S_1$ recouverte d'une couche de vernis V lui conférant un état de surface poli, qui présente par exemple une épaisseur de vernis d'environ 40 $\mu$m. Après l'étape a), la surface de la lentille présentait une rugosité Ra de l'ordre de 0, 18 $\mu$m.

Après l'étape b), la surface présente une rugosité Ra de l'ordre de 0,06 $\mu$m.

L'épaisseur de vernis déposé correspond donc dans cet exemple à environ 670 Ra.

Dans cet exemple, la lentille est en matériau thermodurcissable, plus précisément en poly(carbonate d'allyldiéthyllène glycol), d'indice de réfraction de l'ordre de 1,50 et préférentiellement égal à 1,502.

Ici, l'indice de réfraction de la couche de vernis est égal à 1,50 et préférentiellement égal à 1,502. La surface convexe $S_2$ de la lentille représentée sur la figure 3 est obtenue directement par moulage.

Plus généralement, on peut prévoir que la lentille présente un indice de réfraction inférieur ou égal à 1,55, et qu'elle est obtenue par polymérisation d'une composition à base de bis [allylcarbonate] de diéthylène glycol.

Elle peut présenter également un indice de réfraction supérieur à 1,55 et un indice de réfraction de l'ordre de 1,590 et elle est constituée alors d'un polymère à base de polycarbonate de bisphénol A.

## Revendications

1. Procédé de fabrication d'une surface d'une lentille ophtalmique, selon une prescription donnée, comprenant les étapes suivantes :

   a) usinage de ladite surface par enlèvement de matière en déplaçant un outil de coupe selon une trajectoire continue dans une enveloppe de surface à atteindre, pour former des sillons, deux sillons adjacents étant espacés d'un pas constant compris entre 0,01 et 3 mm, de façon à obtenir une surface présentant une rugosité moyenne arithmétique Ra comprise entre environ 0,1 et 0,7 $\mu$m, et

b) lissage de la surface usinée en déplaçant un outil de lissage selon une trajectoire continue formée de courses dans une enveloppe de surface à atteindre, deux courses adjacentes étant espacées d'un pas constant compris entre 0,2 et 3 mm, pour réaliser un filtrage passe-bande des ondulations de cette surface entre une fréquence basse correspondant à ladite enveloppe de surface et une fréquence haute correspondant à une rugosité de fond, de façon à obtenir une surface lissée présentant une rugosité moyenne arithmétique Ra inférieure à 0,1 $\mu$m.

2. Procédé selon la revendication 1, **caractérisé en ce qu'**à l'étape b) on obtient une surface lissée de rugosité Ra comprise entre 0,05 et 0,07 $\mu$m.

3. Procédé selon l'une des revendications 1 ou 2, **caractérisé en ce que** le pas entre deux courses adjacentes de la trajectoire de l'outil de lissage à l'étape b) est compris entre 0,40 et 1,25 mm.

4. Procédé selon l'une des revendications 1 à 3, **caractérisé en ce que** le pas entre deux courses adjacentes de la trajectoire de l'outil de lissage à l'étape b) est égal à 0,625 mm.

5. Procédé selon l'une des revendications 1 à 4, **caractérisé en ce qu'**à l'étape b) la trajectoire de l'outil de lissage est une spirale.

6. Procédé selon l'une des revendications 1 à 5, **caractérisé en ce qu'**à l'étape a) la trajectoire de l'outil de coupe est une spirale.

7. Procédé selon l'une des revendications 1 à 6, **caractérisé en ce qu'**à l'étape a) l'outil de coupe est un outil de fraisage.

8. Procédé selon la revendication 7, **caractérisé en ce qu'**à l'étape a) l'outil de fraisage présente un sens de rotation en avalant.

9. Procédé selon l'une des revendications 7 ou 8, **caractérisé en ce qu'**à l'étape a) la profondeur de passe de l'outil de fraisage est comprise environ entre 4 et 0,05 mm.

10. Procédé selon l'une des revendications 7 à 9, **caractérisé en ce que** l'avance par dent de l'outil de fraisage est comprise entre 0,05 et 0,03 mm.

11. Procédé selon l'une des revendications 7 à 10, **caractérisé en ce que** l'étape a) se subdivise en trois sous-étapes :

    1) une étape d'ébauche présentant les paramètres suivants:

    le pas de la trajectoire de l'outil de fraisage est de l'ordre de 3 mm,
    la profondeur de passe de l'outil de fraisage est de l'ordre de 4 mm,
    l'avance par dent de l'outil de fraisage est de l'ordre de 0,05 mm,

    2) une étape de demi finition présentant les paramètres suivants:

    le pas de la trajectoire de l'outil de fraisage est de l'ordre de 2 mm,
    la profondeur de passe de l'outil de fraisage est de l'ordre de 0,1 mm,
    l'avance par dent de l'outil de fraisage est de l'ordre de 0,04 mm, et

    3) une étape de finition présentant les paramètres suivants:

    le pas de la trajectoire de l'outil de fraisage est de l'ordre de 1 mm,
    la profondeur de passe de l'outil de fraisage est de l'ordre de 0,05 mm,
    l'avance par dent de l'outil de fraisage est de l'ordre de 0,03 mm.

12. Procédé selon l'une quelconques des revendications précédentes, **caractérisé en ce qu'**à la suite de l'étape b), il comporte une étape c) d'application sur ladite surface lissée d'une couche de vernis pour conférer à ladite surface un état de surface poli.

13. Procédé selon la revendication 12, **caractérisé en ce qu'**à l'étape c) l'épaisseur de la couche de vernis déposée sur ladite surface est comprise au minimum entre environ 30 Ra et 200 Ra, Ra correspondant à la rugosité de surface obtenue à l'étape b).

14. Procédé selon la revendication 12, **caractérisé en ce qu'**à l'étape c) l'épaisseur de la couche de vernis déposée sur ladite surface est comprise entre environ 500 Ra et 800 Ra, Ra correspondant à la rugosité de surface obtenue à l'étape b).

15. Procédé selon l'une des revendications 12 à 14, **caractérisé en ce que** le vernis déposé à l'état liquide sur ladite surface présente une viscosité à 25°C comprise entre 1000 et 3000 mPas.

16. Procédé selon l'une des revendications 12 à 15, **caractérisé en ce que** le vernis déposé à l'étape c) sur la surface lissée présente un indice de réfraction égal à l'indice de réfraction de la lentille ophtalmique avec une tolérance de $\pm$ 0,01.

17. Procédé selon l'une quelconque des revendications 14 à 16, **caractérisé en qu'**à l'étape c) la composition liquide de vernis utilisée comprend :

- un monomère de type polyacrylate ou poly(rnéht)acrylate, et éventuellement un (méth)acryloxysilane, ou
- un monomère à fonction(s) époxy ou leur mélanges.

18. Procédé selon l'une quelconque des revendications 14 à 17, **caractérisé en ce qu'**à l'étape c) la composition liquide de vernis comprend au moins un monomère polyacrylate ou au moins un monomère à fonction(s) époxy.

19. Procédé selon la revendication 18, **caractérisé en ce que** la composition liquide de vernis comprend un mélange de monomères diacrylate et triacrylate.

20. Procédé selon la revendication 19, **caractérisé en ce que** le monomère diacrylate comprend un polyester uréthane diacrylate aliphatique.

21. Procédé selon la revendication 19, **caractérisé en ce que** le monomère triacrylate est choisi parmi le triméthylolpropane éthoxylétriacrylate et le pentaerythritol triacrylate.

22. Procédé selon la revendication 19, **caractérisé en ce que** le ratio en poids diacrylate/triacrylate varie de 50/50 à 40/60.

23. Procédé selon l'une quelconque des revendications 14 à 18, **caractérisé en ce que** la composition liquide de vernis utilisée à l'étape c) comprend un mélange d'un monoacryloxysilane et d'un polyacrylate.

24. Procédé selon la revendication 23, **caractérisé en ce que** le polyacrylate comprend le dipentaerythritol pentaacrylate.

25. Procédé selon la revendication 23, **caractérisé en ce que** la composition liquide de vernis comprend en outre de la silice colloïdale.

26. Procédé selon l'une quelconque des revendications 14 à 17, **caractérisé en ce que** la composition liquide de vernis comprend un oligomère époxyacrylate halogéné et préférentiellement bromé.

27. Procédé selon la revendication 26, **caractérisé en ce que** la composition liquide de vernis comprend en outre un monomère acrylate d'indice inférieur d'au moins 0,1 par rapport à celui de l'époxyacrylate halogéné.

28. Installation de mise en oeuvre du procédé selon l'une des revendications 12 à 27, **caractérisée en ce** qu'elle comprend une machine d'usinage du type machine outil à unité de commande numérique, comportant un support (40) de lentille déplaçable en translation selon un axe vertical (Z, Ym) et pouvant être entraîné en rotation autour d'un axe vertical (A), un outil de fraisage (10) déplaçable en translation selon un axe horizontal, inclinable par rapport à un axe vertical et entraîné en rotation autour d'un axe vertical, et un outil de lissage (10) déplaçable en translation selon un axe horizontal (Xm), inclinable par rapport à un axe vertical (A) et entraîné en rotation autour d'un axe vertical (A), ladite unité de commande numérique est configurée pour mettre en oeuvre le procédé selon l'une des revendications 12 à 27 de sorte que les mouvements d'avance du support (40) et de chacun des outils de fraisage et de lissage (10), à savoir les mouvements de translation (Z, Ym) et de rotation ($R_1$, Zm) du support (40) et les mouvements de translation (X ; Xm) et d'inclinaison (B ; Cm) de chacun des outils de fraisage et de lissage (10), sont pilotés simultanément, la rotation ($R_2$) de l'outil de fraisage (10) et la rotation (Bm) de l'outil de lissage (10) sont pilotées en vitesse par l'unité de commande numérique, l'installation comprenant une machine d'application d'une couche de vernis sur la surface lissée de la lentille, qui comprend un support (1001) de lentille pouvant être entraîné en rotation, et un bras (1003) portant une buse de distribution (1002) à faible pression du vernis liquide, déplaçable en translation verticalement et horizontalement par rapport au support.

**Claims**

1. Process of fabricating a surface of an ophthalmic lens in accordance with a given prescription, including the following steps:

   a) machining said surface by removing material by moving a cutting tool along a continuous trajectory in a surface envelope to be achieved to form grooves, two adjacent grooves being spaced by a constant pitch from 0.01 mm to 3 mm, to obtain a surface having an arithmetic mean roughness Ra from approximately 0.1 $\mu$m to approximately 0.7 $\mu$m, and
   b) smoothing the machined surface by moving a smoothing tool along a continuous trajectory formed of passes within a surface envelope to be achieved, two adjacent passes being spaced by a constant pitch from 0.2 mm to 3 mm, to effect band-pass filtering of the undulations of the surface between a low frequency corresponding to said surface envelope and a high frequency corresponding to a background roughness, to obtain a smoothed surface having an arithmetic mean roughness Ra less than 0.1

μm.

2. Process according to claim 1, **characterised in that** a smoothed surface having a roughness Ra from 0.05 μm to 0.07 μm is obtained in step b).

3. Process according to either claim 1 or claim 2, **characterised in that** the pitch between two adjacent passes of the trajectory of the smoothing tool in step b) is from 0.40 mm to 1.25 mm.

4. Process according to any of claims 1 to 3, **characterised in that** the pitch between two adjacent passes of the trajectory of the smoothing tool in step b) is equal to 0.625 mm.

5. Process according to any of claims 1 to 4, **characterised in that** the trajectory of the smoothing tool in step b) is a spiral.

6. Process according to any of claims 1 to 5, **characterised in that** the trajectory of the cutting tool in step a) is a spiral.

7. Process according to any of claims 1 to 6, **characterised in that** the cutting tool in step a) is a milling tool.

8. Process according to claim 7, **characterised in that** the milling tool in step a) has a "pull" rotation direction.

9. Process according to either claim 7 or claim 8, **characterised in that** the depth of pass of the milling tool in step a) is from approximately 4 mm to approximately 0.05 mm.

10. Process according to any of claims 7 to 9, **characterised in that** the advance per tooth of the milling tool is from 0.05 mm to 0.03 mm.

11. Process according to any of claims 7 to 10, **characterised in that** step a) is divided into three substeps:

    1) a blanking step having the following parameters:

       the pitch of the trajectory of the milling tool is in the order of 3 mm,
       the depth of pass of the milling tool is in the order of 4 mm,
       the advance per tooth of the milling tool is in the order of 0.05 mm,

    2) a semifinishing step having the following parameters:

       the pitch of the trajectory of the milling tool is in the order of 2 mm,
       the depth of pass of the milling tool is in the order of 0.1 mm,
       the advance per tooth of the milling tool is in the order of 0.04 mm, and

    3) a finishing step having the following parameters,

       the pitch of the trajectory of the milling tool is in the order of 1 mm,
       the depth of pass of the milling tool is in the order of 0.05 mm,
       the advance per tooth of the milling tool is in the order of 0.03 mm.

12. Process according to any of the preceding claims, **characterised in that** it includes after step b) a step c) of applying to said smoothed surface a layer of varnish to confer a polished surface state on said surface.

13. Process according to claim 12, **characterised in that** the minimum thickness of the layer of varnish deposited on said surface in step c) is from approximately 30 Ra to approximately 200 Ra, where Ra corresponds to the surface roughness obtained in step b).

14. Process according to claim 12, **characterised in that** the thickness of the layer of varnish deposited on said surface in step c) is from approximately 500 Ra to approximately 800 Ra, where Ra corresponds to the surface roughness obtained in step b).

15. Process according to any of claims 12 to 14, **characterised in that** the varnish deposited in the liquid state on said surface has a viscosity at 25°C from 1 000 mPas to 3 000 mPas.

16. Process according to any of claims 12 to 15, **characterised in that** the varnish deposited on the smoothed surface in step c) has a refractive index equal to the refractive index of the ophthalmic lens to within a tolerance of ±0.01.

17. Process according to any of claims 14 to 16, **characterised in that** the liquid varnish composition used in step c) includes:

    - a polyacrylate or poly(meth)acrylate monomer, and possibly a (meth)acryloxysilane, or
    - a monomer with epoxy function(s), or mixtures thereof.

18. Process according to any of claims 14 to 17, **characterised in that** the liquid varnish composition in step c) includes at least one polyacrylate monomer or at least one monomer with epoxy function(s).

**19.** Process according to claim 18, **characterised in that** the liquid varnish composition includes a mixture of diacrylate and triacrylate monomers.

**20.** Process according to claim 19, **characterised in that** the diacrylate monomer includes an aliphatic urethane diacrylate polyester.

**21.** Process according to claim 19, **characterised in that** the triacrylate monomer is chosen from trimethylolpropane ethoxylated triacrylate and pentaerythritol triacrylate.

**22.** Process according to claim 19, **characterised in that** the diacrylate/triacrylate weight ratio varies from 50/50 to 40/60.

**23.** Process according to any of claims 14 to 18, **characterised in that** the liquid varnish composition used in step c) includes a mixture of a monoacryloxysilane and a polyacrylate.

**24.** Process according to claim 23, **characterised in that** the polyacrylate includes dipentaerythritol pentaacrylate.

**25.** Process according to claim 23, **characterised in that** the liquid varnish composition further includes colloidal silica.

**26.** Process according to any of claims 14 to 17, **characterised in that** the liquid varnish composition includes a halogenated and preferably bromine-containing epoxy acrylate oligomer.

**27.** Process according to claim 26, **characterised in that** the liquid varnish composition further includes an acrylate monomer having an index at least 0.1 lower than that of the halogenated epoxy acrylate.

**28.** Installation for implementing the process according to any of claims 12 to 27, **characterised in that** it includes a digitally controlled machining machine tool including a lens support (40) mobile in translation along a vertical axis (z, Ym) and adapted to be driven in rotation about a vertical axis (A), a milling tool (10) mobile in translation along a horizontal axis, inclinable relative to a vertical axis and driven in rotation about a vertical axis, and a smoothing tool (10) mobile in translation along a horizontal axis (Xm), inclinable relative to a vertical axis (A) and driven in rotation about a vertical axis (A), the digital control unit is configured to implement the process according to any of claims 12 to 27 so that the advance motions of the support (40) and of each of the milling and smoothing tools (10), i.e. the translation motions (Z, Ym) and rotation motions ($R_1$, Zm) of the support (40) and the translation motions (X; Xm) and inclination motions (B; Cm) of each of the milling and smoothing tools (10), are controlled simultaneously, the speed of rotation ($R_2$) of the milling tool (10) and the speed of rotation (Bm) of the smoothing tool (10) are controlled by the digital control unit, the installation including a machine for applying a layer of varnish to the smoothed surface of the lens, which includes a lens support (1001) which can be driven in rotation, and an arm (1003) carrying a lowpressure liquid varnish spray nozzle (1002) mobile in translation vertically and horizontally relative to the support.

## Patentansprüche

**1.** Verfahren zur Herstellung einer Fläche einer ophthalmischen Linse, entsprechend einer ärztlichen Verordnung, das folgende Schritte umfasst:

a) Bearbeiten der Fläche durch Material-Entfemung durch Versetzen eines Schneidwerkzeugs entsprechend einer durchgehenden Bahn in einer Umhüllung der zu erzielenden Fläche, um Furchen zu bilden, wobei zwei nebeneinander liegende Furchen mit konstanter Schrittweite im Bereich von 0,01 und 3 mm beabstandet, dergestalt, dass eine Fläche erzielt wird, die eine mittlere arithmetische Rauheit Ra aufweist, die im Bereich von 0,1 bis 0,7 $\mu$m liegt, und

b) Glätten der bearbeiteten Fläche durch Versetzen eines Glätt-Werkzeugs entsprechend einer durchgehenden Bahn, die aus Wegen in einer Umhüllung der zu erzielenden Fläche gebildet wird, wobei zwei nebeneinander liegende Wege mit konstanter Schrittweite im Bereich von 0,2 und 3 mm beabstandet sind, um eine Bandpassfilterung der Welligkeit dieser Fläche zu erzeügen zwischen einer tiefen Frequenz, die der Umhüllung der Fläche entspricht, und einer hohen Frequenz, die einer Grundrauheit entspricht, dergestalt, dass eine geglättete Fläche erzielt wird, die eine mittlere arithmetische Rauheit Ra unter 0,1 $\mu$m aufweist.

**2.** Verfahren entsprechend Anspruch 1, **dadurch gekennzeichnet, dass** bei Schritt b) eine geglättete Fläche mit einer Rauheit Ra im Bereich von 0,05 und 0,07 $\mu$m erzielt wird.

**3.** Verfahren entsprechend einem der Ansprüche 1 oder 2, **dadurch gekennzeichnet, dass** die Schrittweite zwischen zwei nebeneinander liegenden Wegen der Bahn des Glätt-Werkzeugs bei Schritt b) im Bereich von 0,40 und 1,25 mm liegt.

**4.** Verfahren entsprechend einem der Ansprüche 1 bis 3, **dadurch gekennzeichnet, dass** die Schrittweite zwischen zwei nebeneinander liegenden Wegen der Bahn des Glätt-Werkzeugs bei Schritt b) 0,625 mm beträgt.

**5.** Verfahren entsprechend einem der Ansprüche 1 bis 4, **dadurch gekennzeichnet, dass** bei Schritt b) die Bahn des Glätt-Werkzeugs einer Spirale entspricht.

**6.** Verfahren entsprechend einem der Ansprüche 1 bis 5, **dadurch gekennzeichnet, dass** bei Schritt a) die Bahn des Schneidwerkzeugs einer Spirale entspricht.

**7.** Verfahren entsprechend einem der Ansprüche 1 bis 6, **dadurch gekennzeichnet, dass** das Schneidwerkzeug bei Schritt a) ein Fräswerkzeug ist.

**8.** Verfahren entsprechend Anspruch 7, **dadurch gekennzeichnet, dass** bei Schritt a) das Fräswerkzeug eine Rotation in Gleichlaufrichtung aufweist.

**9.** Verfahren entsprechend einem der Ansprüche 7 oder 8, **dadurch gekennzeichnet, dass** bei Schritt a) die Spantiefe des Fräswerkzeugs ungefähr im Bereich von 4 und 0,05 mm liegt.

**10.** Verfahren entsprechend einem der Ansprüche 7 bis 9, **dadurch gekennzeichnet, dass** der Vorschub pro Zahn des Fräswerkzeugs im Bereich von 0,05 und 0,03 mm liegt.

**11.** Verfahren entsprechend einem der Ansprüche 7 bis 10, **dadurch gekennzeichnet, dass** der Schritt a) sich in drei Unterschritte unterteilt:

    1) ein Vorbereitungsschritt, der folgende Parameter aufweist;

      die Schrittweite der Bahn des Fräswerkzeugs ist in der Größenordnung von 3 mm, die Spantiefe des Fräswerkzeugs ist in der Größenordnung von 4 mm, der Vorschub pro Zahn des Fräswerkzeugs ist in der Größenordnung von 0,05 mm,

    2) ein Vor-Feinbearbeitungssehritt, der folgende Parameter aufweist:

      die Schrittweite der Bahn des Fräswerkzeugs ist in der Größenordnung von 2 mm, die Spantiefe des Fräswerkzeugs ist in der Größenordnung von 0,1 mm, der Vorschub pro Zahn des Fräswerkzeugs ist in der Größenordnung von 0,04 mm,

    3) ein Feinbearbeitungsschritt, der folgende Parameter aufweist:

      die Schrittweite der Bahn des Fräswerkzeugs ist in der Größenordnung von 1 mm, die Spantiefe des Fräswerkzeugs ist in der Größenordnung von 0,05 mm, der Vorschub pro Zahn des Fräswerkzeugs ist in der Größenordnung von 0,03 mm.

**12.** Verfahren entsprechend einem der vorangehenden Ansprüche, **dadurch gekennzeichnet, dass** es nach dem Schritt b) einen Schritt c) des Aufbringens einer Lackschicht auf der geglätteten Fläche umfasst, um der Fläche eine polierte Fläche zu verleihen.

**13.** Verfahren entsprechend Anspruch 12, **dadurch gekennzeichnet, dass** bei Schritt c) die Dicke der auf der Fläche aufgebrachten Lackschicht mindestens zwischen ungefähr 30 Ra und 200 Ra beträgt, wobei Ra der Rauheit der Fläche entspricht, die in Schritt b) erzielt worden ist.

**14.** Verfahren entsprechend Anspruch 12, **dadurch gekennzeichnet, dass** bei Schritt c) die Dicke der auf der Fläche aufgebrachten Lackschicht mindestens zwischen 500 Ra und 800 Ra beträgt, wobei Ra der Rauheit der Fläche entspricht, die in Schritt b) erzielt worden ist.

**15.** Verfahren entsprechend einem der Ansprüche 12 bis 14, **dadurch gekennzeichnet, dass** der in flüssigem Zustand auf die Fläche aufgebrachte Lack bei 25 °C eine Viskosität aufweist, die zwischen 1000 und 3000 mPas beträgt.

**16.** Verfahren entsprechend einem der Ansprüche 12 bis 15, **dadurch gekennzeichnet, dass** der in Schritt c) auf die geglättete Fläche aufgebrachte Lack einen Brechungsindex aufweist, die dem Brechungsindex der ophthalmischen Linse mit einer Toleranz von $\pm$ 0,01 entspricht.

**17.** Verfahren entsprechend einem der Ansprüche 14 bis 16, **dadurch gekennzeichnet, dass** in Schritt c) die flüssige Lackzusammensetzung umfasst:

    - ein Polyacrylat- oder Poly(meht)acrylat-Monomer und eventuell ein (Moth)acryloxysilan, oder
    - ein Monomer mit Epoxygruppe(n) oder deren Gemische.

**18.** Verfahren entsprechend einem der Ansprüche 14 bis 17, **dadurch gekennzeichnet, dass** in Schritt c) die flüssige Lackzusammensetzung zumindest ein Polyacrylat-Monomer oder zumindest ein Monomer mit Epoxygruppe(n) umfasst,

**19.** Verfahren entsprechend Anspruch 18, **dadurch gekennzeichnet, dass** die flüssige Lackzusammensetzung ein Gemisch aus Diacrylat- und Triacrylat-Monomeren umfasst,

**20.** Verfahren entsprechend Anspruch 19, **dadurch gekennzeichnet, dass** das Diacrylat-Monomer ein aliphatisches Polyester-Urethan-Diacrylat umfasst.

**21.** Verfahren entsprechend Anspruch 19, **dadurch gekennzeichnet, dass** das Triacrylat-Monotner aus Trimethylolpropan-Ethoxyletriacrylat und Pantaerythritol-Triacrylat gewählt wird.

**22.** Verfahren entsprechend Anspruch 19, **dadurch gekennzeichnet, dass** das Gewichtsverhältnis Diacrylat/Triacrylat zwischen 50/50 und 40/60 variiert.

**23.** Verfahren entsprechend einem der Ansprüche 14 bis 18, **dadurch gekennzeichnet, dass** in Schritt c) die flüssige Lackzusammensetzung ein Gemisch aus einem Monoacryloxysilan und einem Polyacrylat umfasst,

**24.** Verfahren entsprechend Anspruch 23, **dadurch gekennzeichnet, dass** das Polyacrylat das Dipentaerythritolpentaacrylat umfasst.

**25.** Verfahren entsprechend Anspruch 23, **dadurch gekennzeichnet, dass** die flüssige Lackzusammensetzung des weiteren kolloidales Silizium umfasst.

**26.** Verfahren entsprechend einem der Ansprüche 14 bis 17, **dadurch gekennzeichnet, dass** die flüssige Lackzusammensetzung ein halogeniertes und vorzugsweise bromiertes Epoxyarcylat-Oligomer umfasst.

**27.** Verfahren entsprechend Anspruch 26, **dadurch gekennzeichnet, dass** die flüssige Lackzusammensetzung unter anderem ein Acrylatmonomer mit einem Index umfasst, der mindestens 0,1 unter jenem des halogenierten Epoxyacrylats liegt.

**28.** Einrichtung zur Umsetzung des Verfahrens entsprechend einem der Ansprüche 12 bis 27, **dadurch gekennzeichnet, dass** sie eine Bearbeitungsmaschine vom Typ einer Werkzeugmaschine mit digitaler Steuereinheit umfasst, welche umfasst, eine Linsen-Halterung (40), die in Translation entsprechend einer vertikalen Achse (Z, Ym) versetzbar ist und die in Rotation um eine vertikale Achse (A) angetrieben werden kann, ein Fräswerkzeug (10), das in Translation entsprechend einer horizontalen Achse, neigbar bezüglich einer vertikalen Achse, versetzbar ist und in Rotation um eine vertikale Achse angetrieben wird, und ein Glätt-Werkzeug (10), das in Translation entsprechend einer horizontalen Achse (Xm), neigbar bezüglich einer vertikalen Achse (A), versetzbar ist und in Rotation um eine vertikale Achse angetrieben wird, wobei die digitale Steuereinheit zur Umsetzung des Verfahrens entsprechend einer der Ansprüche 12 bis 27 dergestalt konfiguriert ist, dass die Vorschubbewegungen der Halterung (40) und jedes der Fräs- und Glätt-Werkzeuge (10), insbesondere die Translations- (Z; Ym) und Rotations- (R1, Zm) Bewegungen der Halterung (40) und die Translations- (X; Xm) und Neigungs- (B; Cm) Bewegungen jedes der Fräs- und Glätt-Werkzeuge (10), gleichzeitig gesteuert werden, die Geschwindigkeit der Rotation (R2) des Fräswerkzeugs (10) und die Geschwindigkeit der Rotation (Bm) des Glätt-Werkzeugs (10) von der digitalen Steuereinheit gesteuert werden, wobei die Einrichtung eine Maschine zum Aufbringen einer Lackschicht auf die geglättete Fläche der Linse umfasst, welche eine in Rotation antreibbare Halterung (1001) der Linse und einen Arm (1003) umfasst, der eine Verteilerdüse (1002) für niedrigen Druck des flüssigen Lacks trägt und in Translation vertikal und horizontal gegenüber der Halterung versetzbar ist.

Fig.1

Fig.2

Fig.4a

Fig.4b

Fig.3

Fig.5

Fig.6

Fig.7

Fig.8

Fig.9

**EP 1 175 280 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0849038 A

- EP 0685298 A